(19) Europäisches Patentamt
European Patent Office
Office européen des brevets

(11) **EP 2 517 190 B1**

(12) **EUROPÄISCHE PATENTSCHRIFT**

(45) Veröffentlichungstag und Bekanntmachung des Hinweises auf die Patenterteilung:
**11.01.2017   Patentblatt 2017/02**

(21) Anmeldenummer: **10787282.2**

(22) Anmeldetag: **23.11.2010**

(51) Int Cl.:
*G08G 1/16* (2006.01)          *B62D 15/02* (2006.01)

(86) Internationale Anmeldenummer:
**PCT/EP2010/007091**

(87) Internationale Veröffentlichungsnummer:
**WO 2011/076322 (30.06.2011 Gazette 2011/26)**

(54) **AUTOMATISCHES VORWÄRTSEINPARKEN IN KOPFPARKLÜCKEN**

AUTOMATIC FORWARD PARKING IN PERPENDICULAR PARKING SPACES

PROCÉDÉ DE STATIONNEMENT AUTOMATIQUE, EN MARCHE AVANT, DANS DES PLACES LIBRES DE STATIONNEMENT EN ÉPI OU EN BATAILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009   DE 102009060169**

(43) Veröffentlichungstag der Anmeldung:
**31.10.2012   Patentblatt 2012/44**

(73) Patentinhaber: **Volkswagen AG**
**38436 Wolfsburg (DE)**

(72) Erfinder: **AUER, Richard**
**38442 Wolfsburg (DE)**

(56) Entgegenhaltungen:
**EP-A1- 2 143 618      EP-A2- 1 561 673**
**WO-A1-02/075354      DE-A1- 3 844 340**

**Beschreibung**

Die Erfindung betrifft ein Verfahren zum automatischen Vorwärtseinparken eines Kraftfahrzeugs in eine Kopfparklücke gemäß dem Oberbegriff des Anspruchs 1 bzw. dem Oberbegriff des Anspruchs 10 sowie ein entsprechendes Fahrerassistenzsystem gemäß dem Oberbegriff des Anspruchs 12.

Bei derzeitigen Einparkhilfen bzw. Fahrerassistenzsystemen zum automatischen Einparken, wobei hier das Einparken sowohl in die Längsparklücken als auch in Kopfparklücken erfolgt, wird während der Vorbeifahrt an einer Parklücke diese mit einem geeigneten Sensorsystem vermessen und anschließend rückwärts eingeparkt. Bei Längsparklücken ist dies die einzige Möglichkeit in eine Längsparklücke einzuparken, da die Hinterachse im Allgemeinen nicht gelenkt werden kann. Längsparklücken, in denen man vorwärts einparken kann, sind allerdings so groß, dass man nicht von einem Einparken, sondern eher von einem Fahrspurwechsel sprechen müsste.

Ein derartiger rückwärtiger Einparkvorgang in eine Parklücke wird beispielsweise in der DE 0 2009 006 336 A1 beschirieben. Dort wird ein automatischer Einparkvorgang eines Kraftfahrzeugs überwacht, wobei vor dem eigentlichen Einparkvorgang während der Vorbeifahrt des Kraftfahrzeugs an einer Parklücke diese mittels eines kamerabasierten Verfahrens vermessen wird und ferner Hindernisse in der Umgebung der Parklücke bestimmt werden. Während des automatischen Einparkvorgangs wird mittels des kamerabasierten Verfahrens die Umgebung des Kraftfahrzeugs weiterhin vermessen, wobei die bei der Vermessung während des Einparkvorgangs neu detektierten Hindernisse mit vordetektierten Hindernissen verglichen werden und eine entsprechende Maßnahme erfolgt, wenn es zu einer Diskrepanz zwischen neu detektierten und bekannten Hindernissen kommt.

Ferner ist aus der DE 10 2009 006 331 A1 ein Verfahren zum automatischen Einparken in eine Parklücke oder zum Ausparken aus einer Parklücke eines Kraftfahrzeugs zu entnehmen. Dabei wird die Parklücke durch ein Umfelderkennungssystem des Kraftfahrzeugs bestimmt, es wird eine Zieltrajektorie und ein auf der Zieltrajektorie liegender Positionsendpunkt relativ zur Parklücke definiert. Anschließend wird ein geeigneter Lenkwinkel ausgehend von der aktuellen Fahrzeugposition errechnet und dieser Lenkwinkel wird zum Ein- bzw. Ausparken verwendet.

In der EP 2 143 618 A1 wird ein Verfahren zur Steuerung eines Parkassistenzsystems für Fahrzeuge, die insbesondere in Fahrtrichtung ein-oder beidseitig seitlich parallel zu einem Hindernis abgestellt werden beschrieben, wobei bei einer automatisch, semiautomatischen oder durch den Fahrer bewirkten Erkennung einer Abstellfläche, deren optimale Abstellposition außerhalb einer zentralen Abstellposition in der Abstellfläche liegt, eine automatische, semiautomatische oder durch den Fahrer bewirkte Korrektur zu einer seitlich versetzten Abstellposition vorgenommen wird.

Allen bekannten Verfahren ist gemeinsam, dass nach der Vermessung der Parklücke eine Zieltrajektorie definiert und gegebenenfalls iterativ nachkorrigiert wird, entlang der das Kraftfahrzeug einzügig oder mehrzügig rückwärts in die Parklücke einfährt.

Nachteilig bei den rückwärts einparkenden Strategien ist, dass einerseits der nachfolgende Verkehr bei einem rückwärtigen Einparken in eine Kopfparklücke behindert wird, ferner die Gefahr besteht, dass ein nachfolgendes Fahrzeug sich durch Vorwärtseinparken der freien Parklücke bemächtigt und dass üblicherweise sowohl in Parkhäusern als auch in Garagen vorwärts eingeparkt wird.

Der Erfindung liegt daher die Aufgabe zugrunde, ein Verfahren zum Vorwärtseinparken eines Kraftfahrzeugs in eine Kopfparklücke einschließlich einer Garage anzugeben.

Diese Aufgabe wird durch ein Verfahren ohne vorheriges Ausmessen der Parklücke mit den Merkmalen des Anspruchs 1, ein Verfahren mit vorherigem Ausmessen der Kopfparklücke gemäß den Merkmalen des Anspruchs 10 sowie durch eine Fahrerassistenzvorrichtung zur Durchführung der genannten Verfahren mit den Merkmalen des Anspruchs 12 gelöst. Bevorzugte Ausgestaltungen der Erfindung sind Gegenstand der Unteransprüche.

In einer ersten Ausführungsform weist das erfindungsgemäße Verfahren zum Vorwärtseinparken eines Kraftfahrzeugs in eine Kopfparklücke, wobei das Kraftfahrzeug eine Umfeldsensorik zur Ermittlung von Umfelddaten und Hindernissen im Umfeld des Kraftfahrzeugs aufweist, die folgenden Schritte auf:

- Vorausrichten des Kraftfahrzeugs vor der Kopfparklücke derart, dass ein Soll-Lenkwinkel zwischen einem maximalen Lenkwinkel $\delta_{max}$ und einem minimalen Lenkwinkel $\delta_{min}$ liegt,
- iteratives Durchsuchen des zulässigen Lenkwinkelbereichs zwischen dem maximalen $\delta_{max}$ Lenkwinkel und dem minimalen Lenkwinkel $\delta_{min}$ nach einem aktuellen Lenkwinkel $\delta_{akt, i}$ während einer Vorwärtsrangierbewegung des Kraftfahrzeugs in die Kopfparklücke hinein, wobei der aktuelle Lenkwinkel $\delta_{ak, i}$ eine maximale freie Weglänge $s_i$, i = 0,...n in die Kopfparklücke bewirkt, ohne dass das Fahrzeug auf Hindernisse trifft, und
- Beendigung der Vorwärtsrangierbewegung, falls das Ende des Einparkvorgangs erreicht ist oder eine Rückwärtsrangierbewegung aufgrund eines Hindernisses durchgeführt werden muss.

Dabei liegen die genannten maximalen und minimalen Lenkwinkel $\delta_{max}$, $\delta_{min}$ vorzugsweise im Bereich $\pm 17°$.

Vorzugsweise werden durch die Umfeldsensorik aufgefundene Hindernisse in eine Umfeldkarte eingetragen, d.h., gespeichert. Ebenso werden Hindernisse, die wieder verschwinden, aus der Umfeldkarte wieder ausgetragen.

Bevorzugt wird der erste Schritt i = 0 des iterativen Durchsuchens durchgeführt, indem ein vorgegebener Krümmungsbereich $\kappa_{Fzg;i=0}$ mit einer vorgegebenen Krümmungsiterationsgröße $\Delta\kappa$ zur Bestimmung eines idealen Krümmungsschätzwerts gescannt wird und die Vorwärtsrangierbewegung des Kraftfahrzeugs entlang des idealen Krümmungsschätzwerts des ersten Schritts erfolgt. Dabei entspricht der Krümmungsschätzwert des ersten Schritts der maximalen freien Weglänge $s_i = 0$. Ferner bedingt der Krümmungsschätzwert den Lenkwinkel des Fahrzeugs.

Weiter bevorzugt umfasst der vorgegebene Krümmungsbereich des ersten Schritts den Bereich -0,15 bis 0,15, wobei die Krümmungsiterationsgröße $\Delta\kappa$ des ersten Iterationsschritt 0,0005 beträgt. Der vorgegebene Krümmungsbereich von -0,15 bis +0,15 entspricht dabei bei einem Radstand von ca. 2m einem minimalen und maximalen Lenkwinkel von ca. $\pm 17°$.

Für den zweiten und die darauf folgenden Schritte i = 1, 2 ..., n der Iteration wird der Krümmungsschätzwert des vorhergehenden Schritts als Initialwert für den aktuellen Schritt verwendet, wobei zur Bestimmung des aktuellen Krümmungsschätzwertes des i-ten Schrittes um den Initialwert des vorherigen Schritts mit einer aktuellen Krümmungsiterationsgröße gescannt wird, wobei die aktuelle Krümmungsiterationsgröße eine Funktion der maximalen Weglänge $s_{i-1}$ des vorhergehenden Schritts ist. Ferner ist der zu durchsuchende Krümmungsbereich des aktuellen Schritts zur Ermittlung des aktuellen Krümmungsschätzwerts eine Funktion der Krümmungsiterationsgröße des aktuellen Schritts und die Vorwärtsrangierbewegung des Kraftfahrzeugs erfolgt entlang des aktuellen Krümmungsschätzwerts des zweiten bzw. der darauf folgenden Schritte.

Vorzugsweise wird die Krümmungsiterationsgröße des zweiten und der darauf folgenden Schritte mittels der folgenden Formel bestimmt:

$$\Delta\kappa = \frac{\Delta\kappa_0}{(\min(s_{i-1},\sigma_0)/\sigma_0)^2} \tag{1}$$

Dabei ist $s_{i-1}$ die in dem vorherigen Schritt ermittelte maximale Wegstrecke und $\sigma_0$ ist eine experimentell ermittelte Konstante. Im vorliegenden Fall hat sich $\sigma_0 = 3m$ als vernünftiger Wert erwiesen.

Vorzugsweise werden zur Bestimmung des aktuellen Krümmungsschätzwerts die Krümmungen, d.h. der folgende Krümmungsbereich durchsucht:

$$\kappa_{such;j} = \kappa_0 + (j-3)\Delta\kappa \tag{2}$$

Dabei gilt vorzugsweise j = 0, 1, .... m, wobei m eine natürliche Zahl > 0 ist. Vorzugsweise ist m = 6, mit anderen Worten, der Suchbereich umfasst sieben Werte. Andere Werte für m sind natürlich möglich, wodurch der Suchbereich größer oder kleiner wird. Ferner ist $\kappa_0$ definiert als die Krümmung des vorherigen Schrittes, d.h.

$$\kappa_0 = \kappa_{Fzg,i-1}. \tag{3}$$

Ferner ist es möglich, die Fahrzeugausrichtung relativ zur Parklücke zu bestimmen, indem die detektierten seitlichen Hindernisse betrachtet werden, die innerhalb eines vorgegebenen Abstandswerts liegen, wobei durch die Abstände der seitlichen, d.h. linken und rechten, Hindernisse definierten Hindernispunkte jeweils eine linke und eine rechte Regressionsgerade gelegt werden. Aus den beiden Regressionsgeraden lässt sich dann durch Mittelwertbildung und Betrachtung des eingeschlossenen Winkels die Position und Ausrichtung des Fahrzeugs relativ zur Kopfparklücke bestimmen. Dabei kann die Position und die Ausrichtung während der Vorwärtsrangierbewegung ebenfalls berücksichtigt werden. Für die Rückwärtsrangierbewegung dient die Erkennung die Ausrichtung des Fahrzeugs in der Parklücke und daraus die mittleren Abstände des Fahrzeugs nach links und rechts dazu, eine günstige Ausgangsposition für die nachfolgende Vorwärtsrangierbewegung zu suchen.

Eine zweite Ausführungsform des erfindungsgemäßen Verfahrens zum Vorwärtseinparken eines Kraftfahrzeugs in eine Kopfparklücke besteht darin, dass das Kraftfahrzeug eine Umfeldsensorik zur Ermittlung von Umfelddaten und Hindernissen im Umfeld des Kraftfahrzeugs aufweist, wobei während der Vorbeifahrt des Kraftfahrzeugs an einer Kopfparklücke durch die Umfeldsensorik eine Vermessung der Kopfparklücke erfolgt. Danach wird eine Einparktrajektorie zum Vorwärtseinparken des Kraftfahrzeugs relativ zum aktuellen Ort des Kraftfahrzeugs errechnet, wobei das Kraftfahrzeug durch eine Rückwärtsbewegung so ausgerichtet wird, dass es mit einer nachfolgenden Vorwärtsbewegung in die Kopfparklücke einparken kann. Zum iterativen Vorwärtseinparken des Kraftfahrzeugs in die Kopfparklücke kann sich dieses entlang der berechneten Trajektorie bewegen, wobei die Trajektorie durch aktuelle Umfelddaten immer wieder korrigiert werden kann. Ferner ist es möglich, dass die Vorwärtsbewegung des Kraftfahrzeugs durch das im Vorangegangenen geschilderte iterative Verfahren der ersten Ausführungsform erfolgt.

Wie bereits erwähnt, kann während des automatischen Einparkvorgangs die Umfeldsensorik weiterhin das Umfeld des Fahrzeugs vermessen, und es kann so die Einparktrajektorie an die neuen Umfelddaten angepasst werden.

Ein erfindungsgemäßes Fahrerassistenzsystem zum automatischen Einparken eines Kraftfahrzeugs und zur Durchführung der im Vorangegangenen beschriebenen Verfahren umfasst eine Umfeldsensorik zum Ermitteln von Umfelddaten des Kraftfahrzeugs, eine Berechnungseinheit zum kontinuierlichen Berechnen einer Einparktrajektorie aus den Umfelddaten und eine Steuerung, welche die Fahrbewegung des Kraftfahrzeugs ausführt. Dabei umfasst die Steuerung Aktuatoren zum Beschleunigen und Verlangsamen des Kraftfahrzeugs, Aktuatoren für einen Bremseingriff und Aktuatoren für einen Lenkeingriff.

Bevorzugte Ausführungsformen der Erfindung werden nachfolgend anhand der Zeichnungen beschrieben. Dabei zeigt:

Fig. 1        einen Vorwärtseinparkvorgang gemäß der ersten Ausführungsform,

Fig. 2a, b    einzügige Vorwärtseinparkmanöver,

Fig. 3        ein mehrzügiges Einparken in schematischer Darstellung, und

Fig. 4        einen Einparkvorgang gemäß der zweiten Ausführungsform in schematischer Darstellung.

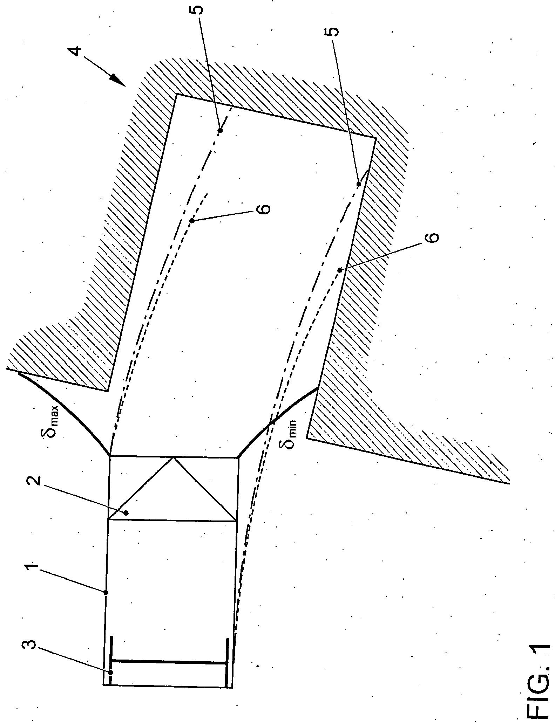

Fig. 1 zeigt ein Fahrzeug 1 mit schematisch dargestellter Vorderachse 2 und Hinterachse 3, welches vor einer Parklücke 4 steht. Dabei ist ein Lenkwinkelbereich $\delta_{min}$ und $\delta_{max}$ in Fig. 1 schematisch dargestellt. Der Lenkwinkelbereich zwischen $\delta_{min}$ und $\delta_{max}$ wird nach Lenkwinkeln gesucht, mit denen möglichst weit gefahren werden kann, ohne Hindernisse zu treffen. So sind in Fig. 1 zwei mögliche Krümmungen, d.h. Lenkwinkel, 5, 6 dargestellt, wobei es ersichtlich ist, dass mit der Kurve 5 tiefer in die Kopfparklücke 4 hinein gefahren werden kann als mit der Kurve 6. Die Strecke, die den größten Weg anbietet, ohne ein Hindernis zu treffen, also im vorliegenden Fall die Kurve 5, gibt den Lenkwinkel, d.h. die Krümmung, vor, die dann im ersten Schritt eingeschlagen wird. Als Notiz sei angemerkt, dass mit der vorgeschlagenen iterativen Methode im Falle fehlender Hindernisse eine Geradeausfahrt vollzogen wird. Daher kann das Verfahren nicht nur in Garagen, sondern auch in engen Fahrsituationen verwendet werden.

Bei Beginn des Hineintastalgorithmus wird der gesamte mögliche Krümmungsbereich $\kappa_i = 0 = -0,15...0,15$ im Krümmungsiterationsgrößen $\Delta\kappa = 0,0005$ abgescannt, um einen unteren Initialwert für $\kappa_i = 0$ zu bekommen. Dieser Initialwert und auch alle darauf folgenden Werte verwenden immer die zuletzt ermittelte Krümmung als gute Schätzung für den aktuellen Iterationsschritt, um den Suchraum für die Folgeschritte einzuschränken. In den Folgeschritten wird nämlich aus Gründen der Rechenleistung des Suchraums eingeschränkt und nur in der Umgebung der zuletzt ermittelten Krümmung nach neuen optimalen Krümmungen gesucht. Um lokalen Minima zu entweichen, die vor allem dann entstehen, wenn das Fahrzeug in die Nähe eines Hindernisses kommt, wird die Krümmungsiterationsgröße eines jeden Schritts an die freie Weglänge $s_{i-1}$ aus dem letzten Schritt gekoppelt, d.h.,

$$\Delta\kappa = \frac{\Delta\kappa_0}{(\min(s_{i-1},\sigma_0)/\sigma_0)^2} \qquad\qquad (1)$$

wobei $\sigma_0 = 3$ m eine experimentell ermittelte Konstante ist, und $s_{i-1}$ die aus dem letzten Schritt ermittelte maximale Wegstrecke darstellt. Die lokalen Minima, wobei ein aktuelles Minimum auch ein globales Minimum sein kann, sind daran zu erkennen, dass die maximale Wegstrecke immer kleiner wird. Deswegen wird dann der Suchbereich vergrößert, um möglicherweise aus einem lokalen Minimum zu entkommen.

Beim Suchen einer neuen idealen Krümmung werden die Krümmungen

$$\kappa_{such;j} = \kappa_0 + (j-3)\Delta\kappa \qquad\qquad (2)$$

um die Krümmung aus dem letzten Schritt überprüft, wobei $j$ die Werte $j = 0, ..., 6$ einnehmen kann und $\kappa_0$ die gefundene Krümmung des vorangegangenen Schrittes ist, d.h. $\kappa_0 = \kappa_{Fzg,i-1}$.

Bei jeder dieser Bähnkrümmungen wird eine Fläche auf der Fahrbahn definiert, die von den Fahrzeugbegrenzungen eingeschränkt wird. Bei einer Linkskurve bildet daher die linke hintere Ecke und die vordere rechte Ecke und bei einer Rechtskurve die vordere linke Ecke und die hintere rechte Ecke die Flächenbegrenzung, wie dies auch i Fig. 1 durch die Kurven 5, 6 dargestellt ist.

Es gibt nun zwei Möglichkeiten, weshalb eine Vorwärtsbewegung gestoppt werden muss. Entweder hat das Fahrzeug das Ende des Einparkvorgangs erreicht, oder das Fahrzeug muss eine Rückwärtsrangierbewegung durchführen, um ein Hindernis zu umgehen.

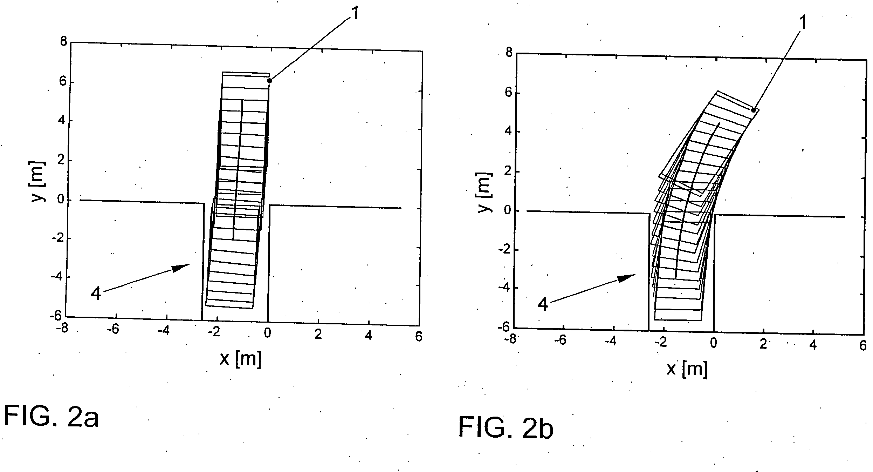

So zeigen die Fig. 2a und Fig. 2b zwei mögliche einzügige Einparkszenarien für unterschiedliche Ausgangspositionen des Fahrzeugs 1 vor der Parklücke 4. Mit anderen Worten, der Fahrer fährt eine günstige Ausgangsposition zum Vorwärtseinparken an, d.h:, er stellt sich günstig beispielsweise vor eine Garage und gibt dem Fahrerassistenzsystem das Signal, den Einparkvorgang mittels des iterativen Vorgehens durchzuführen.

Beim Vorwärtseinparken kann es allerdings dazu kommen, dass der Lenkeinschlag eine große kollisionsfreie Fahrstrecke für die Fahrzeugfront bedeuten würde, dass aber die Fahrzeugseite mit einem Hindernis, beispielsweise einer der Ecken einer Garage, kollidieren würde. Wenn das der Fall ist, dann muss das Fahrzeug zuerst rückwärts rangieren, um eine günstige Ausgangsposition zu erreichen.

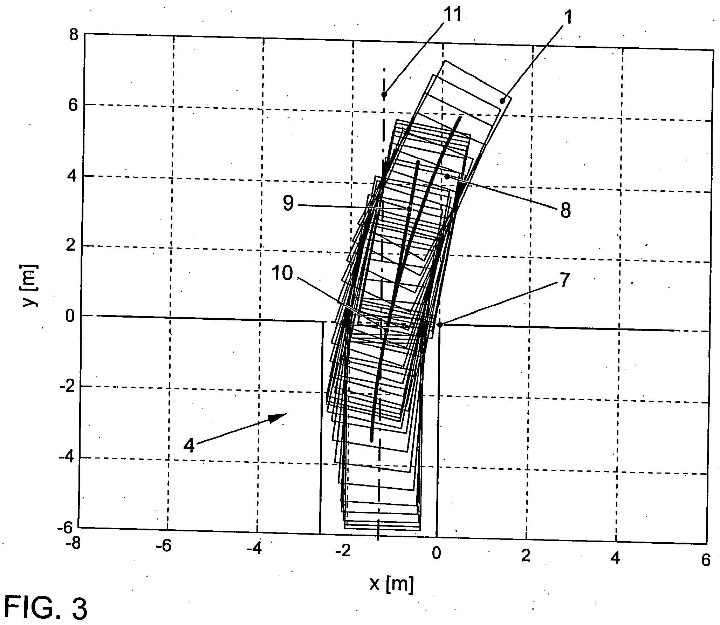

Dies ist in Fig. 3 dargestellt, in der beim fünften Iterationsschritt das Fahrzeug 1 die in Fahrtrichtung betrachtete linke Kante der Kopfparklücke treffen würde. Demzufolge führt das Fahrzeug eine Rückwärtsbewegung aus, um eine Kollision mit einem Hindernis zu vermeiden. Mit anderen Worten, ausgehend von einer ungünstigen Ausgangsposition des Fahrzeugs 1 vor der Kopfparklücke 4 führt das 'Fahrzeug eine erste Vorwärtsbewegung 8 aus, bis die Gefahr einer Kollision einer Flanke des Fahrzeugs 1 mit einer Ecke 7 der Kopfparklücke 4 droht. Um die Kollision zu vermeiden, führt das Fahrzeug eine erste Rückwärtsbewegung 9 aus, um das Fahrzeug 1 in eine günstigere neue Ausgangsposition zu manövrieren. Dazu kann die letzte Position des Fahrzeugs 1 in der Parklücke 4 entlang der ersten Vorwärtsbewegung sowie dessen Ausrichtung berücksichtigt werden, um zu einer günstigeren neuen Ausgangsposition zu gelangen. Mit anderen Worten, die Längsachse des Fahrzeugs 1 muss näher an die Längsachse 11 der Kopfparklücke 4 gebracht werden. Anschließend führt das Fahrzeug 1 eine erneute zweite Vorwärtsbewegung 10 in die Parklücke 4 hinein aus.

Das Ende des Vorwärtseinparkvorgangs ist dann erreicht, wenn entweder das Ende der Parklücke erreicht wird, wobei eine Parklückenerkennung einen Zielpunkt definiert, oder wenn der Fahrer ein entsprechendes Signal an das Fahrzeug weiter gibt. Die Erkennung, ob eine Weiterfahrt mit einem Hindernis versperrt ist, kann durch einen minimalen Abstand vorgegeben werden.

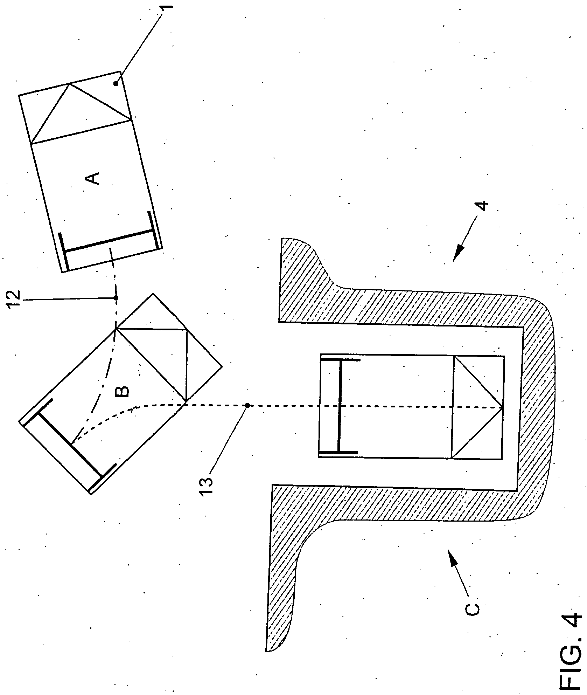

Fig. 4 schließlich zeigt einen Einparkvorgang nach vorherigem Vermessen der Parklücke. Dabei ist das Fahrzeug 1 an der Parklücke 4 vorbei gefahren und hat mit einer geeigneten Umfeldsensorik die Parklücke 4 vermessen. Ferner wurde dem Fahrer signalisiert, dass die Parklücke ausreichend groß ist. Ausgehend von einer Ausgangsposition A wird seitens der Fahrerassistenzeinheit eine Einparktrajektorie berechnet, wobei eine erste Rückwärtsbewegung 12 das Fahrzeug aus der Position A in eine Zwischenposition B überführt, die für einen Vorwärtseinparkvorgang geeignet ist. Mit einer darauffolgenden Vorwärtsbewegung 13 wird das Fahrzeug 1 in die Position C in der Parklücke 4 überführt. Für die Trajektorienplanung der Vorwärtsbewegung können übliche Trajektorienplanungen verwendet werden, wobei auch für die Vorwärtstrajektorie 13 das im Vorangegangenen beschriebene iterative Vorwärtseinparkverfahren ebenfalls Verwendung finden kann.

**Bezugszeichenliste**

| | |
|---|---|
| 1 | Fahrzeug |
| 2 | Vorderachse (lenkbar) |
| 3 | Hinterachse |
| 4 | Parklücke |
| 5 | Fahrkurve |
| 6 | Fahrkurve |
| 7 | Ecke Kopfparklücke |
| 8 | erste Vorwärtsbewegung |
| 9 | erste Rückwärtsbewegung |
| 10 | zweite Vorwärtsbewegung |
| 11 | Längsachse der Parklücke |
| 12 | Rückwärtsbewegung |
| 13 | Vorwärtsbewegung |

| | |
|---|---|
| A | Ausgangsposition |
| B | Zwischenposition |
| C | Endposition |

**Patentansprüche**

1. Verfahren zum Vorwärtseinparken eines Kraftfahrzeugs (1) in eine Kopfparklücke (4), wobei das Kraftfahrzeug (1) eine Umfeldsensorik zur Ermittlung von Umfelddaten und Hindernissen im Umfeld des Kraftfahrzeugs aufweist, mit den folgenden Schritten:

   Vorausrichten des Kraftfahrzeugs (1) vor der Parklücke (4) derart, dass ein Solllenkwinkel $\delta_{frei}$ zwischen einem maximalen Lenkwinkel $\delta_{max}$ und einem minimalen Lenkwinkel $\delta_{min}$ liegt, Iteratives Durchsuchen des zulässigen Lenkwinkelbereichs zwischen dem maximalen Lenkwinkel und dem minimalen Lenkwinkel nach einem aktuellem Lenkwinkel während einer Vorwärtsrangierbewegung des Kraftfahrzeugs (1) in die Kopfparklücke (4) hinein, mit welchem eine maximale freie Weglänge $s_i$, i $\varepsilon$ [0,...n], in die Kopfparklücke (4) zurückgelegt werden kann ohne auf Hindernisse zu treffen, und
   Beendigung der Vorwärtsrangierbewegung, falls das Ende des Einparkvorgangs erreicht ist oder eine Rückwärtsrangierbewegung aufgrund eines Hindernisses durchgeführt werden muss.

2. Verfahren nach Anspruch 1, **dadurch gekennzeichnet, dass** durch die Umfeldsensorik sowohl aufgefundene Hindernisse als auch verschwindende Hindernisse in eine Umfeldkarte eingetragen bzw. ausgetragen werden.

3. Verfahren nach einem der Ansprüche 1 oder 2, **dadurch gekennzeichnet, dass** der erste Schritt i=0 des iterativen Durchsuchens erfolgt, indem ein vorgegebener Krümmungsbereich mit einer vorgegebenen Krümmungsiterationsgröße zur Bestimmung eines idealen Krümmungsschätzwertes, der dem aktuellen Lenkwinkel des ersten Schrittes entspricht, gescannt wird und die Vorwärtsrangierbewegung des Kraftfahrzeugs (1) entlang des idealen Krümmungsschätzwertes des ersten Schritts erfolgt.

4. Verfahren nach Anspruch 3, **dadurch gekennzeichnet, dass** der vorgegebene Krümmungsbereich des ersten Schritts den Bereich $\kappa_{Fzg;i=0}$ -0,15 bis 0,15 umfasst, wobei die erste Krümmungsiterationsgröße $\Delta\kappa_0$ = 0,0005 beträgt.

5. Verfahren nach einem der Ansprüche 3 oder 4, **dadurch gekennzeichnet, dass** in dem zweiten und den darauf folgenden Schritten i = 1, 2,...,n der Iteration der Krümmüngsschätzwert $\kappa_{i-1}$ des vorherigen Schrittes als Initialwert für den aktuellen Schritt verwendet wird, wobei zur Bestimmung des aktuellen Krümmungsschätzwerte $\kappa_i$ um den Initialwert mit einer aktuellen Krümmungsiterationsgröße $\Delta\kappa_i$, die eine Funktion der maximalen Weglänge $s_{i-1}$ des vorherigen Schrittes ist, gescannt wird und wobei der zu durchsuchende Krümmungsbereich des aktuellen Schrittes zur Ermittlung des aktuellen Krümmungsschätzwertes $\kappa_i$ eine Funktion der Krümmungsiterationsgröße des aktuellen Schrittes ist, und die Vorwärtsrangierbewegung des Kraftfahrzeugs (1) entlang des aktuellen Krümmungsschätzwertes des zweiten bzw. der darauf folgenden Schritte erfolgt.

6. Verfahren nach Anspruch 5, **dadurch gekennzeichnet, dass** die Krümmungsiterationsgröße der zweiten und der darauf folgenden Schritte bestimmt wird mittels $\Delta\kappa_i = \dfrac{\Delta\kappa_0}{(\min(s_{i-1}, \sigma_0)/\sigma_0)^2}$ mit $\sigma_0$ eine vorgegebene Konstante und $s_{i-1}$ die in dem vorherigen Schritt ermittelte maximale Wegstrecke ist.

7. Verfahren nach einem der Ansprüche 5 oder 6, **dadurch gekennzeichnet, dass** zur Bestimmung des aktuellen Krümmungsschätzwert $\kappa_i$ die Krümmungen $\kappa_{such,j} = \kappa_{i-1} + (j - 3)\Delta\kappa_i$ für j = 0, 1, ..., m durchsucht werden.

8. Verfahren nach einem der vorangegangenen Ansprüche, **dadurch gekennzeichnet, dass** die Fahrzeugausrichtung zur Parklücke (4) bestimmt wird, indem die Abstände detektierter seitlicher Hindernisse bestimmt und durch die linken und rechten Punkte, deren Abstand kleiner als ein vorbestimmter Abstandswert ist, jeweils eine Regressionsgerade gelegt wird, wobei der Mittelwert der durch die beiden Regressionsgeraden definierten Winkel relativ zur Fahrzeugachse ein Maß für die Ausrichtung des Kraftfahrzeugs (1) bildet.

9. Verfahren nach Anspruch 8, **dadurch gekennzeichnet, dass** die Ausrichtung zur Erkennung der Positionierung des Kraftfahrzeugs (1) in der Parklücke (4) bezüglich der Vorwärtsrangierbewegung verwendet wird und für die Rückwärtsrangierbewegung zur Ermittlung einer günstigen Ausgangsposition für die nächste Vorwärtsrangierbewegung.

10. Fahrerassistenzsystem zum automatischen Einparken eines Kraftfahrzeugs (1) in eine Kopfparklücke (4) und zur Durchführung des Verfahrens nach Anspruch 1 mit einer Umfeldsensorik zum Ermitteln von Umfelddaten des Kraftfahrzeugs, mit einer Berechnungseinheit zum kontinuierlichen Berechnen einer Einparktrajektorie aus den Umfelddaten und einer Steuerung zum Bewirken einer Fahrbewegung des Kraftfahrzeugs (1).

**Claims**

1. Method for the forward parking of a motor vehicle (1) in a perpendicular parking space (4), the motor vehicle (1) having environment sensors for determining environment data and obstacles in the environment of the motor vehicle, having the following steps of:

   prealigning the motor vehicle (1) in front of the parking space (4) in such a manner that a setpoint steering angle $\delta_{free}$ is between a maximum steering angle $\delta_{max}$ and a minimum steering angle $\delta_{min}$,
   iteratively searching the permissible steering angle range between the maximum steering angle and the minimum steering angle for a current steering angle during a forward maneuvering movement of the motor vehicle (1) into the perpendicular parking space (4),
   which steering angle makes it possible to cover a maximum free path length $s_i$, i $\varepsilon$ [0, ...n], into the perpendicular parking space (4) without hitting obstacles, and
   terminating the forward maneuvering movement if the end of the parking operation has been reached or a reverse maneuvering movement must be carried out on account of an obstacle.

2. Method according to Claim 1, **characterized in that** both obstacles which have been found and disappearing obstacles are recorded in a map of the environment or removed from the latter by the environment sensors.

3. Method according to either of Claims 1 and 2, **characterized in that** the first step i=0 of the iterative search is carried out by scanning a predefined curvature range with a predefined curvature iteration size in order to determine an ideal curvature estimated value which corresponds to the current steering angle of the first step, and the forward maneuvering movement of the motor vehicle (1) is carried out along the ideal curvature estimated value of the first step.

4. Method according to Claim 3, **characterized in that** the predefined curvature range of the first step comprises the range $\kappa_{veh;i=0}$ of -0.15 to 0.15, the first curvature iteration size being $\Delta_{K0} = 0.0005$.

5. Method according to either of Claims 3 and 4, **characterized in that**, in the second step and the subsequent steps i = 1, 2, ..., n of the iteration, the curvature estimated value $\kappa_{i-1}$ of the previous step is used as the initial value for the current step, scanning being carried out around the initial value with a current curvature iteration size $\Delta_{Ki}$, which is a function of the maximum path length $s_{i-1}$ of the previous step, in order to determine the current curvature estimated value $\kappa_i$, and the curvature range to be searched in the current step in order to determine the current curvature estimated value $\kappa_i$ being a function of the curvature iteration size of the current step, and the forward maneuvering movement of the motor vehicle (1) is carried out along the current curvature estimated value of the second step and the subsequent steps.

6. Method according to Claim 5, **characterized in that** the curvature iteration size of the second step and the subsequent steps is determined by means of $\Delta\kappa_i = \dfrac{\Delta\kappa_0}{\left(\min\left(s_{i-1}, \sigma_0\right)/\sigma_0\right)^2}$, where $\sigma_0$ is a predefined constant and $s_{i-1}$ is the maximum distance determined in the previous step.

7. Method according to either of Claims 5 and 6, **characterized in that**, in order to determine the current curvature estimated value $\kappa_i$, the curvatures $\kappa_{search,j} = \kappa_{i-1} + (j - 3)\Delta\kappa_i$ for j = 0, 1, ..., m are searched.

8. Method according to one of the preceding claims, **characterized in that** the vehicle alignment with respect to the parking space (4) is determined by determining the distances between detected lateral obstacles and by placing a respective regression line through the left-hand and right-hand points, the distance between which is less than a predetermined distance value, the mean value of the angles relative to the vehicle axis, as defined by the two regression lines, forming a measure of the alignment of the motor vehicle (1).

9. Method according to Claim 8, **characterized in that** the alignment is used to detect the positioning of the motor vehicle (1) in the parking space (4) with respect to the forward maneuvering movement and, for the reverse maneuvering movement, is used to determine a favorable starting position for the next forward maneuvering movement.

10. Driver assistance system for the automatic parking of a motor vehicle (1) in a perpendicular parking space (4) and for carrying out the method according to Claim 1, having environment sensors for determining environment data relating to the motor vehicle, having a calculation unit for continuously calculating a parking trajectory from the environment data, and having a controller for moving the motor vehicle (1).

**Revendications**

1. Procédé de stationnement en marche avant d'un véhicule automobile (1) dans un emplacement de stationnement perpendiculaire (4), dans lequel le véhicule automobile (1) comporte un système de capteurs destiné à détecter des données d'environnement et des obstacles dans l'environnement du véhicule automobile, comportant les étapes consistant à :

préalablement orienter le véhicule automobile (1) à l'avant de l'emplacement de stationnement (4) de manière à ce qu'un angle de braquage théorique $\delta_{frei}$ se situe entre un angle de braquage maximal $\delta_{max}$ et un angle de braquage minimal $\delta_{min}$, rechercher de manière itérative la plage d'angles de braquage admissible entre l'angle de braquage maximal et l'angle de braquage minimal conformément à un angle de braquage réel pendant un mouvement de rangement vers l'avant du véhicule automobile (1) dans l'emplacement de stationnement perpendiculaire (4), avec lequel une longueur de trajet libre maximale $s_i$, avec $i \in [0, ..., n]$, peut être parcourue dans l'emplacement de stationnement perpendiculaire (4) sans rencontrer d'obstacles, et
terminer le mouvement de rangement vers l'avant dans le cas où la fin du processus de stationnement est attente ou dans un cas où un mouvement de rangement vers l'arrière doit être effectué en raison d'un obstacle.

2. Procédé selon la revendication 1, **caractérisé en ce que** des obstacles rencontrés et des obstacles s'éloignant sont introduits dans une carte de l'environnement ou en sont retirés par le système de capteurs d'environnement.

3. Procédé selon l'une quelconque des revendications 1 ou 2, **caractérisé en ce que** la première étape, pour i=0, de la recherche itérative est effectuée en analysant une plage de courbure prédéterminée avec une grandeur d'itération de courbure prédéterminée pour déterminer une estimation de courbure idéale qui correspond à l'angle de braquage réel de la première étape et **en ce que** le mouvement de rangement vers l'avant du véhicule automobile (1) s'effectue le long de la valeur estimée de la courbure de la première étape.

4. Procédé selon la revendication 3, **caractérisé en ce que** la plage de courbure de la première étape comprend la plage pour laquelle $K_{Fzg;i=0}$ va de -0,15 à 0,15, dans lequel la première grandeur d'itération de courbure $\Delta k_0 = 0,0005$.

5. Procédé selon l'une quelconque des revendications 3 ou 4, **caractérisé en ce que**, lors de la seconde étape et des étapes suivantes, pour i=1, 2,...,n, l'itération de la valeur estimée de la courbure $k_{i-1}$ de l'étape précédente est utilisée en tant que valeur initiale pour l'étape actuelle, dans lequel, pour déterminer la valeur estimée de la courbure actuelle $k_i$, un balayage est effectué autour de la valeur initiale avec une grandeur d'itération actuelle de la courbure $\Delta k_i$ qui est la longueur de parcours maximale $s_{i-1}$ de l'étape précédente, et dans lequel la plage de courbure à rechercher lors de l'étape actuelle pour déterminer la valeur actuelle estimée de la courbure $k_i$ est une fonction de la grandeur d'itération de la courbure de l'étape actuelle, et le mouvement de rangement vers l'avant du véhicule automobile (1) est effectué le long de la valeur estimée actuelle de la courbure de la deuxième étape et des étapes qui la suivent.

6. Procédé selon la revendication 5, **caractérisé en ce que** la grandeur d'itération de la courbure de la deuxième étape et des étapes qui la suivent est prédéterminée conformément à $\Delta k_i = \dfrac{\Delta k_0}{\left(\min(s_{i-1}, \sigma_0)/\sigma_0\right)^2}$ , où $\sigma_0$ est une constante prédéterminée et $s_{i-1}$ est le parcours maximal déterminé lors de l'étape précédente.

7. Procédé selon l'une quelconque des revendications 5 ou 6, **caractérisé en ce que**, pour déterminer la valeur actuelle estimée de la courbure $k_i$, les courbures $k_{such,j} = k_{i-1} + (j-3)\Delta k_i$, pour j = 0, 1, ..., m, sont recherchées.

8. Procédé selon l'une quelconque des revendications précédentes, **caractérisé en ce que** l'orientation du véhicule vers l'emplacement de stationnement (4) est déterminée en déterminant les distances d'obstacles latéraux détectés et en déterminant une droite de régression passant par les points gauches et droits dont la distance est respectivement inférieure à une valeur de distance prédéterminée, dans lequel la moyenne des angles définis par les deux droites de régression par rapport à l'axe du véhicule constitue une mesure de l'orientation du véhicule automobile (1).

9. Procédé selon la revendication 8, **caractérisé en ce que** l'orientation est utilisée pour détecter le positionnement du véhicule automobile (1) dans l'emplacement de stationnement (4) par rapport au mouvement de rangement vers l'avant et pour le mouvement de rangement vers l'arrière afin de déterminer une position de sortie avantageuse pour le mouvement de rangement vers l'avant suivant.

10. Système d'assistance au conducteur destiné au stationnement automatique d'un véhicule automobile (1) dans un emplacement de stationnement perpendiculaire (4) et à mettre en oeuvre le procédé selon la revendication 1, comportant un système de capteurs d'environnement permettant de détecter des données d'environnement du véhicule automobile, une unité de calcul destinée à calculer en continu une trajectoire de stationnement à partir des données d'environnement et une unité de commande destinée à provoquer un mouvement de conduite du véhicule automobile (1).

FIG. 1

FIG. 2b

FIG. 2a

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 02009006336 A1
- DE 102009006331 A1
- EP 2143618 A1